# EUROPÄISCHE PATENTSCHRIFT

(11) **EP 3 880 376 B1**
(45) Veröffentlichungstag und Bekanntmachung des Hinweises auf die Patenterteilung: **24.01.2024**
(21) Anmeldenummer: 19798634.2
(22) Anmeldetag: 06.11.2019
(51) Int. Cl.: B08B 15/00, B08B 5/04, B29C 64/371, B29C 64/357, B29C 64/259, B22F 3/105

(54) **VERFAHREN UND VORRICHTUNG ZUM BETRIEB EINER METALL-DRUCKEINRICHTUNG**
METHOD AND APPARATUS FOR OPERATING A METAL PRINTING DEVICE
PROCÉDÉ ET DISPOSITIF DE FONCTIONNEMENT D'UN SYSTÈME D'IMPRESSION MÉTALLIQUE

(30) Priorität: 15.11.2018 DE 102018128757
(43) Veröffentlichungstag der Anmeldung: 22.09.2021
(73) Patentinhaber: Gebr. Becker GmbH, 42279 Wuppertal (DE)
(72) Erfinder: RADERMACHER, Bernhard, 41352 Korschenbroich (DE); RADAU, Christian, 58332 Schwelm (DE)
(74) Vertreter: Müller, Enno
(86) Internationale Anmeldenummer: PCT/EP2019/080393
(87) Internationale Veröffentlichungsnummer: WO 2020/099213

(56) Entgegenhaltungen:
- EP-A1- 2 289 652
- WO-A1-2018/087251
- DE-A1-102016 216 839
- US-A1- 2016 207 147
- US-A1- 2018 236 603

## Beschreibung

### Gebiet der Technik

Die Erfindung betrifft zunächst ein Verfahren nach den Merkmalen des Oberbegriffes des Anspruches 1.

Weiter betrifft die Erfindung eine Vorrichtung nach den Merkmalen des Oberbegriffes des Anspruches 2. Stand der Technik

Bei Metall-Druckeinrichtungen ist es bekannt, der Kabine der Druckeinrichtung im Umwälzverfahren Prozessgas zuzuführen, das im Hinblick auf während des Metall-Druckvorganges entstehende Verunreinigungen, die insbesondere durch Laseranwendung entstehen können, gereinigt bzw. regeneriert wird. Weiter ist in diesem Zusammenhang bekannt, nach Abschluss eines Metall-Druckvorganges die Einrichtung bzw. die Kabine, in welcher der Druckvorgang vorgenommen wurde, von darin verbliebenen Metallpartikeln, die nicht zu den in diesem Verfahren hergestellten Gegenstand verschmolzen wurden, durch einen Saugvorgang wieder zu entfernen. Hierzu sind bei bekannten Vorrichtungen ein Gebläse für die Reinigung der also in der Regel von dem Prozessgas gebildeten Atmosphäre in der Kabine vorgesehen, sowie ein Sauggebläse für die Partikelentfernung.

Eine Metall-Druckeinrichtung ist beispielsweise bekannt aus der DE 10 2017 206 792 A1.

Aus der US 2016/207147 A1 ist eine Vorrichtung gemäß dem Oberbegriff vom Anspruch 2 zum Betrieb eines Metall-Druckeinrichtung bekannt, bei welcher eine Reinigung von Prozessgas mittels eines Gebläses durchgeführt wird, das mittels eines Saugkanals aus der Kabine herausgesaugt wird. Aus der DE 10 2016 216839 A1 ist ein Verfahren zum Austragen von Füllmaterial aus einem in einem Bauteil vorhandenen Hohlraum mittels eines Roboters bekannt.

### Zusammenfassung der Erfindung

Ausgehend von einem Stand der Technik gemäß der US 2016/ 07147 A1 beschäftigt sich die Erfindung mit der Aufgabe, ein vorteilhaftes Verfahren und eine vorteilhafte Vorrichtung zum Betrieb einer Metall-Druckeinrichtung anzugeben.

Diese Aufgabe ist hinsichtlich des Verfahrens beim Gegenstand des Anspruches 1 gelöst, wobei darauf abgestellt ist, dass als Gebläse ein Sauggebläse mit einem Saugleitungsanschluss vorgesehen wird, dass ein erster und ein zweiter Saugkanal ausgehend von der Kabine vorgesehen werden, die in einer dem Sauggebläse vorgeschalteten Umschalteinrichtung zusammengeführt sind, dass mit dem Sauggebläse sowohl der erste Verfahrensschritt, als auch der zweite Verfahrensschritt durchgeführt wird, wobei der Betrieb durch die dem Sauggebläse vorgeschaltete Umschalteinrichtung zwischen einem saugseitigen Anschluss des ersten und/oder des zweiten Saugkanals an das Sauggebläse umgeschaltet wird.

Diese Aufgabe ist hinsichtlich der der Vorrichtung beim Gegenstand des Anspruches 2 gelöst, wobei darauf abgestellt ist, dass als Gebläse ein Sauggebläse mit einem Saugleitungsanschluss vorgesehen ist und dass mit dem Sauggebläse sowohl ein Absaugen von Prozessgas aus der Kabine zur Regenerierung der Atmosphäre, als auch nach Beendigung des Druckvorganges ein Absaugen überschüssiger Partikel aus der Kabine durchführbar ist, dass ein erster und ein zweiter Saugkanal ausgehend von der Kabine vorgesehen sind, die in einer dem Sauggebläse vorgeschalteten Umschalteinrichtung zusammengeführt sind, wodurch der Betrieb zwischen einem saugseitigen Anschluss des ersten und/oder des zweiten Saugkanals an das Sauggebläse umschaltbar ist.

Sowohl das Absaugen von Prozessgas aus der Kabine, wie angegeben, wie auch die Entfernung überschüssiger Partikel kann unter Nutzung unterschiedlicher Auslässe vorgenommen sein. Der Einlass ist bevorzugt dazu benutzt, gereinigtes oder reines Prozessgas der Kabine wieder zuzuführen.

Das Prozessgas ist in der Regel ein inertes Gas wie beispielsweise Argon oder Stickstoff, wobei weiter bevorzugt Argon oder Stickstoff als alleiniges Gas als Prozessgas genutzt wird. Prinzipiell kann aber auch eine Mischung von Gasen, insbesondere also inerten Gasen, als Prozessgas vorliegen. In der Regel wird angestrebt, dass die Atmosphäre in einer solchen Kabine keinen oder praktisch keinen Sauerstoff enthält.

Die vorgeschlagene Lösung erweist sich insbesondere als herstellungs- und anwendungsgünstig. Zur Durchführung sowohl des ersten Verfahrensschritts, als auch des zweiten Verfahrensschritts ist nur ein Sauggebläse vorgesehen, welches gegebenenfalls wahlweise zur Durchführung des ersten oder zweiten Verfahrensschritts genutzt wird. Vorteilhaft erweist sich ein solches Verfahren und eine solche Vorrichtung auch bezüglich einer günstigen Wartung der Vorrichtung, da nunmehr nur ein Sauggebläse zur Durchführung beider Verfahrensschritte vorgesehen sein muss.

Auch kann das Sauggebläse genutzt sein zu einer möglichen zeitgleichen Durchführung beider Verfahrensschritte. So kann insbesondere bei Durchführung des zweiten Verfahrensschrittes zur Entfernung überschüssiger Metallpartikel aus der Kabine auch zugleich der erste Verfahrensschritt zur Reinigung der Atmosphäre in der Kabine durchgeführt sein.

Für jeden Betriebsvorgang bzw. jeden Verfahrensschritt ist ein gesonderter Saugkanal, ausgehend von der Kabine in Richtung auf das Sauggebläse, vorgesehen, welche beiden Saugkanäle in einer Umschalteinrichtung zusammengeführt sind. Unter Nutzung dieser Umschalteinrichtung kann dann der eine oder der andere Saugkanal, gegebenenfalls beide Saugkanäle, zur entsprechenden Durchführung des ersten oder des zweiten Verfahrensschrittes, an das Sauggebläse saugseitig angeschlossen werden.

Die Umschalteinrichtung kann hierbei so ausgelegt sein, dass entweder ein erster Betrieb (erster Verfahrensschritt) oder ein zweiter Betrieb (zweiter Verfahrensschritt) durchführbar ist. In weiterer Ausgestaltung kann jedoch die Umschalteinrichtung auch eine Schaltstellung aufweisen, in welcher beide Betriebe, entsprechend sowohl der erste, als auch der zweite Verfahrensschritt, zugleich durchgeführt werden können.

In einer möglichen Ausgestaltung kann der eine Prozessgas-Saugstrom in dem ersten Verfahrensschritt durch eine erste Regenerationseinrichtung geleitet sein, die unterschiedlich ist zu einer zweiten Regenerationseinrichtung, durch die der Prozessgas-Saugstrom in dem zweiten Verfahrensschritt geleitet wird. Entsprechend können in der Vorrichtung oder zugeordnet der Vorrichtung zumindest zwei Regenerationseinrichtungen vorgesehen sein, eine zur Durchführung des ersten Verfahrensschrittes (Regenerierung der Atmosphäre in der Kabine) und eine zur Durchführung des zweiten Verfahrensschrittes (Entfernung überschüssiger Partikel nach Beendigung des Druckvorganges).

Die Regenerationseinrichtungen für den ersten und für den zweiten Verfahrensschritt können hinsichtlich des Aufbaus und der gegebenenfalls vorgesehenen Filter oder Filtervorrichtungen gleich gestaltet sein. Auch können diese grundsätzlich oder auch nur bezüglich einer Komponente, beispielsweise bezüglich des Filters, unterschiedlich gestaltet sein. Darüber hinaus kann die jeweilige Regenrationseinrichtung insbesondere hinsichtlich der Filtereigenschaften abgestimmt sein auf den jeweiligen Verfahrensschritt, nämlich einerseits hinsichtlich einer Abscheidung von gasförmigen Bestandteilen und/oder von Klein- und Kleinstpartikeln aus dem aus der Kabine abgesaugten Prozessgas und andererseits auf das Abscheiden von gegebenenfalls gegenüber den aus dem Prozessgas-Saugstrom herauszufilternden Klein- und Kleinstpartikeln abzusaugenden gröberen Partikeln, insbesondere Metallpartikeln.

Die in der entsprechenden Regenerationseinrichtung abgeschiedenen Partikel, insbesondere den gröberen Partikeln im Zuge des zweiten Verfahrensschrittes, können in der Regenerationseinrichtung oder strömungsmäßig dieser nachgeschaltet in einem Abscheidebehälter gesammelt werden. Diese abgeschiedenen gröberen Partikel können gegebenenfalls einem nächsten Druckprozess wieder zugeführt werden.

Auch bezüglich aus der Kabinenatmosphäre abgeschiedener Fein- und Feinstpartikel im ersten Verfahrensschritt kann eine solche Abscheidung in einen Sammelbehälter oder dergleichen gegeben sein.

Der Prozessgas-Saugstrom für den ersten und/oder zweiten Verfahrensschritt kann gemäß einer bevorzugten Ausgestaltung aus der Kabine herausgeleitet sein. So kann weiter insbesondere die eine oder die mehreren Regenerationseinrichtungen wie auch weiter bevorzugt das Sauggebläse außerhalb der Kabine, dieser jedoch gegebenenfalls zugordnet, angeordnet sein. Eine Filterung, gegebenenfalls eine erste Filterung des Prozessgas-Saugstromes kann, wie weiter bevorzugt, außerhalb der Kabine erfolgen.

Auch kann mittels desselben Sauggebläses auch Prozessgas in einem reinen oder gereinigten Zustand in die Kabine geleitet werden. So kann weiter das Sauggebläse eine Saugöffnung aufweisen und eine Drucköffnung. Über die Drucköffnung kann Prozessgas in dem reinen oder gereinigten Zustand in die Kabine geleitet werden. Zwischen Sauggebläse und Kabine kann ein Vorfilter und/oder eine Kühleinrichtung zur entsprechenden Behandlung des Prozessgases in einem reinen oder gereinigten Zustand geschaltet sein.

Das Sauggebläse kann mit der ersten und der zweiten Regenerationseinrichtung unmittelbar der Kabine zugeordnet in einer gemeinsamen Umhausung mit der Kabine angeordnet sein.

In weiterer Ausgestaltung kann das Sauggebläse mit der ersten und der zweiten Regenerationseinrichtung in einen durch eine gemeinsame Umhausung gebildeten Modul zusammengefasst sein, wobei das Modul mit der Kabine über mindestens eine Saug- und eine Druckleitung verbunden ist. Ein solches Modul kann zur Durchführung der vorbeschriebenen Verfahrensschritte der Kabine zuordbar sein, wobei im Bereich der mindestens einen Saug- und einen Druckleitung eine entsprechende Schnittstelle vorgesehen sein kann.

Auch kann das Modul mit der Kabine über zwei Saug- und eine Druckleitung verbunden sein. Über die Druckleitung kann das Prozessgas in dem reinen oder dem gereinigten Zustand in die Kabine geleitet werden. Die beiden Saugleitungen dienen zur Durchführung des ersten und zweiten Verfahrensschritts.

Die Umschalteinrichtung kann auch bei einer, wie vorbeschriebenen Modulbauweise zugeordnet der Kabine vorgesehen sein. Bevorzugt ist diesbezüglich die Anordnung der Umschalteinrichtung in dem Modul, so dass in diesem Modul die Umschaltung zwischen den beiden Saugleitungen durchgeführt werden kann.

Darüber hinaus ist bei einer gegebenen Modulbauweise bevorzugt auch eine elektrische Schnittstelle und/oder eine Kommunikationsschnittstelle zwischen der Kabine bzw. der Steuerung der Metall-Druckeinrichtung und dem Modul vorgesehen, so insbesondere zur Aktivierung und Deaktivierung des Sauggebläses, wie auch weiter zur Umschaltung der Umschalteinrichtung zwischen dem ersten und dem zweiten Verfahrensschritt.

Dem Modul können gemäß einer weiteren Ausgestaltung zwei Regenerationseinrichtungen für den ersten Verfahrensschritt zugeordnet sein, von denen bei Betrieb der Vorrichtung nur eines durchströmt wird. Hierdurch ist ein unterbrechungsfreier Betrieb der Metall-Druckeinrichtung im Druckmodus und somit im ersten Verfahrensschritt ermöglicht. Eine Regenerationseinrichtung für den ersten Verfahrensschritt kann so auch während des laufenden Betriebes im Rahmen des ersten Verfahrensschritte beispielsweise zu Reinigungs- und/oder Entleerungszwecken beispielsweise aus dem Modul entnommen werden, während die zweite Regenerationseinrichtung zur Filterung und Absonderung im Zuge der Reinigung der Atmosphäre aktiv ist.

Für den zweiten Verfahrensschritt kann gemäß einer bevorzugten Ausgestaltung nur eine Regenerationseinrichtung vorgesehen sein. Deren maximales Abscheidevermögen kann angepasst sein an das durch die in der Metall-Druckeinrichtung bzw. in der Kabine insgesamt verarbeitete Maximalvolumen an Partikeln, insbesondere Metallpartikeln.

### Kurze Beschreibung der Zeichnungen

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheiten nicht durch ein anderes Teil ersetzt ist, ist damit auch für dieses weitere Ausführungsbeispiel als jedenfalls mögliches vorhandenes teil beschrieben. Die Zeichnung zeigt:
- Fig. 1: in schematischer perspektivischer Darstellung eine Vorrichtung zum Betrieb einer Metall-Druckeinrichtung mit einer Kabine und einem Sauggebläse zur Durchführung eines ersten und eines zweiten Verfahrensschrittes, betreffend die Durchführung des ersten Verfahrensschritts;
- Fig. 2: eine schematische Rückansicht der Vorrichtung, betreffend die Durchführung des ersten Verfahrensschrittes;
- Fig. 3: eine im Wesentlichen der Fig. 1 entsprechenden Darstellung, betreffend den zweiten Verfahrensschritt, mit einem gegenüber Fig. 1 größeren Sammelbehältnis;

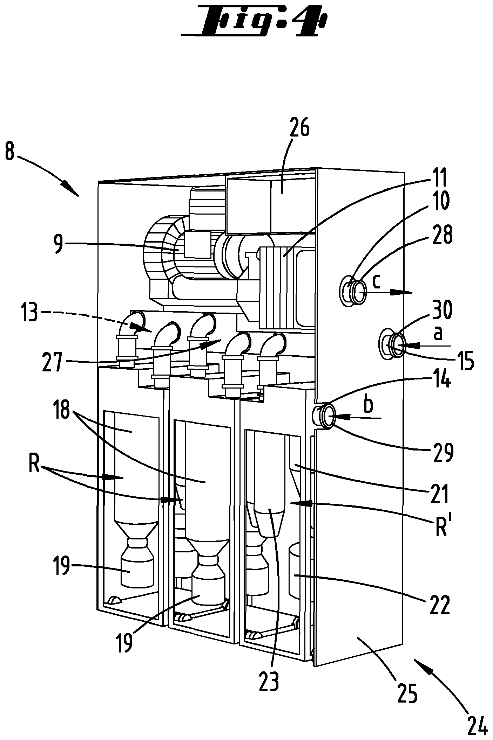

- Fig. 4: eine weitere Ausführungsform, bei welcher das Sauggebläse neben Regenerationseinrichtungen und einer Umschalteinrichtung in einem Modul zusammengefasst sind;

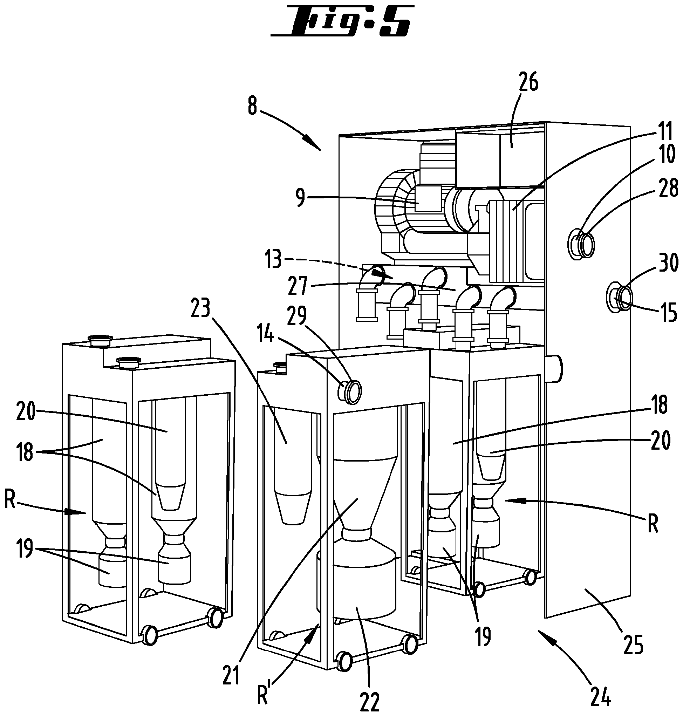

- Fig. 5: eine der Fig. 4 im Wesentlichen entsprechende perspektivische Darstellung nach Entnahme von zwei Regenerationseinrichtungen;
- Fig. 6: eine schematische Darstellung der Vorrichtung.

### Beschreibung der Ausführungsformen

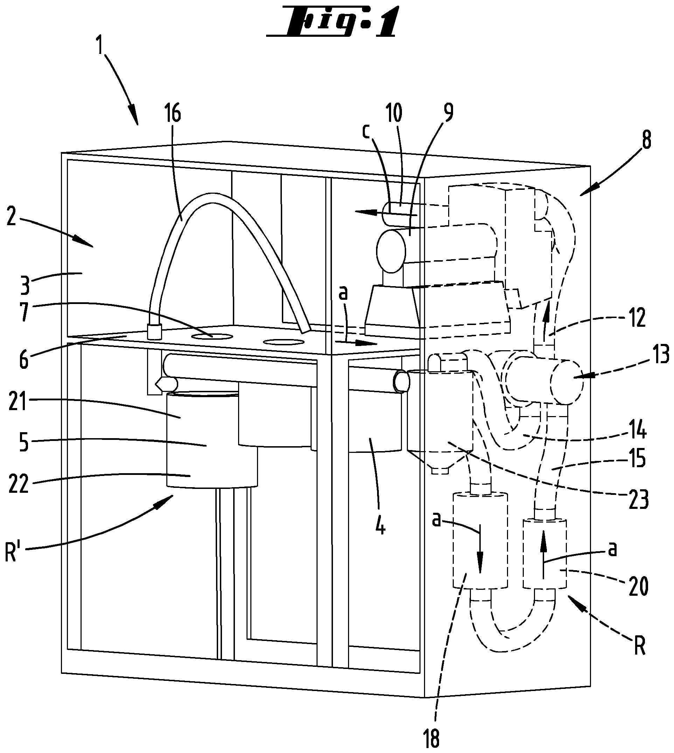

Dargestellt und beschrieben ist, zunächst mit Bezug zu Fig. 1, eine Vorrichtung 1 zum Betrieb einer Metall-Druckeinrichtung 2.

Die Metall-Druckeinrichtung 2 weist zunächst und im Wesentlichen eine Kabine 3 auf, in welcher der Metall-Druckvorgang durchgeführt werden kann. Hierbei wird zufolge selektiven Laserschmelzens aus feinem Metallpulver unter Einwirkung eines Laserstrahls schichtweise ein gewünschtes Bauteil hergestellt. Die Herstellung kann hierbei direkt aus sogenannten 3D-CAD-Daten erfolgen, so dass voll funktionsfähige Bauteile aus hochwertigen Metallen hergestellt werden können.

Neben der nicht dargestellten Laservorrichtung ist weiter im Wesentlichen eine Auftragsvorrichtung zum Auftragen einer Metallpulverschicht Teil der Druckeinrichtung, darüber hinaus ein Partikel-Vorratsbehältnis 4, wie weiter auch ein Partikel-Sammelbehältnis 5, in welchen hinein überschüssige Partikel abgestreift werden können.

Hierzu ist in der Bearbeitungsfläche 6 eine entsprechende Öffnung 7 vorgesehen.

Die Herstellung des Metallteils kann, wie auch bevorzugt, in einer rundum geschlossenen Kabine 3 erfolgen, wozu diese gegebenenfalls mit einer die Kabine 3 verschließenden Tür oder dergleichen versehen sein kann.

Bezüglich des Herstellungsvorganges wird bspw. auf die eingangs zitierte DE 10 2017 206 792 A1 verwiesen.

Während des Druckvorganges erfolgt bevorzugt eine Regenerierung der Atmosphäre in der Kabine 3. Hierzu wird im Umwälzverfahren Prozessgas, das ein bevorzugtes Schutzgas sein kann, wie etwa Argon oder Stickstoff, in die Kabine 3 eingeblasen und zugleich abgesogen. Hierzu dient eine Saugvorrichtung 8 mit einem Sauggebläse 9. Bei dem Sauggebläse 9 kann es sich um einen sogenannten Seitenkanalverdichter oder dergleichen handeln.

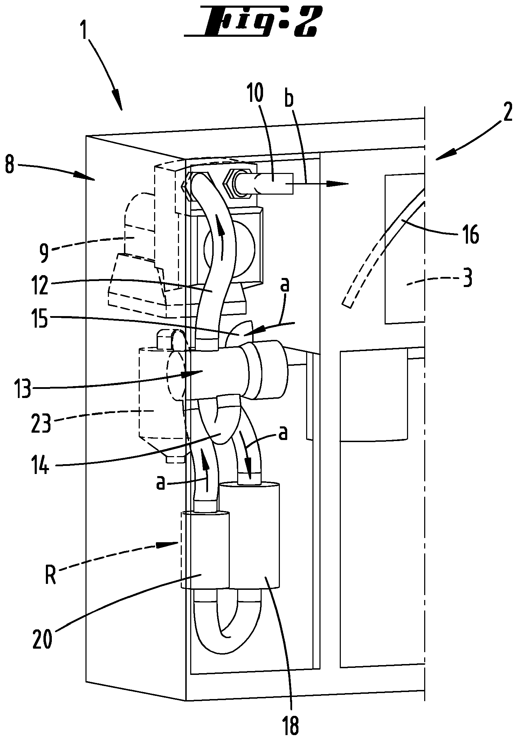

Die Saugvorrichtung 8 ist in dem in den Figuren 1 - 3 dargestellten ersten Ausführungsbeispiel in der Vorrichtung 1, unmittelbar zugeordnet der Metall-Druckeinrichtung 2 angeordnet.

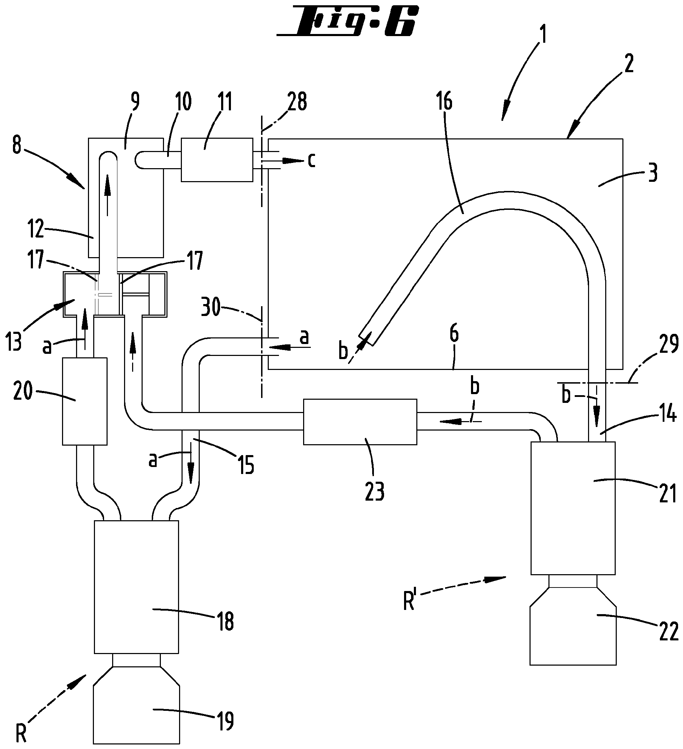

Wie weiter auch aus der schematischen Prinzip-Darstellung in Fig. 6 zu erkennen, ist das Sauggebläse 9 über einen Druckleitung 10 und einen Saugleitungsanschluss 12 mit dem Kabineninneren strömungsmäßig verbunden.

Hierbei kann die Druckleitung 10, ausgehend von dem Sauggebläse 9, unmittelbar, gegebenenfalls unter Zwischenschaltung eines Kühlers 11, in die Kabine 3, zugeordnet einem Deckenbereich münden. Im Betrieb ergibt sich in der Druckleitung 10 eine Richtung c der Druckströmung des Prozessgases.

Der weiter an das Sauggebläse 9 angeschlossene Saugleitungsanschluss 12 führt zu einer Umschalteinrichtung 13, die ausgelegt ist, diesen Saugleitungsanschluss 12 wahlweise mit einer ersten Saugleitung 14 oder einer (zweiten) Saugleitung 15 strömungsmäßig in Verbindung zu bringen.

Die Saugleitung 15 mündet in den dargestellten Ausführungsbeispielen der Bearbeitungsfläche 6 zugeordnet in die Kabine 3, während die weitere (erste) Saugleitung 14 strömungsmäßig angeschlossen ist, an einen sich innerhalb der Kabine 3 erstreckenden, einer manuellen Absaugung innerhalb der Kabine 3 dienenden flexiblen Schlauchelement 16.

Die Umschalteinrichtung 13 kann, wie auch dargestellt, ebenfalls Teil der Saugvorrichtung 8 sein, entsprechend örtlich zugeordnet dem Sauggebläse 9 angeordnet sein.

Weiter kann die Umschalteinrichtung 13 manuell bedienbar sein, alternativ motorisch, beispielsweise elektromotorisch, wobei ein in Fig. 6 lediglich schematisch dargestelltes Abschieberelement 17 bevorzugt nur einen Strömungsweg freigibt, nämlich den von der Saugleitung 14 in den Saugleitungsanschluss 12 oder von der Saugleitung 15 in den Saugleitungsanschluss 12 (siehe strichpunktierte Darstellung in Fig. 6).

Das Schlauchelement 16 wird bei entsprechender Saugstromaktivierung durch die Saugleitung 14 genutzt zum Absaugen etwaiger nach dem Druckvorgang sich beispielsweise auf der Bearbeitungsfläche 9 weiterhin befindlicher Metallpartikel und/oder zur Leerung beispielsweise des Partikel-Sammelbehältnisses 5.

Somit können für beide Verfahrensschritte, nämlich den ersten Verfahrensschritt betreffend die Prozessgas- bzw. Schutzgasumwälzung, und dem zweiten Verfahrensschritt, betreffend die Absaugung von überschüssigen Metallpartikeln über das Schlauchelement, dasselbe Sauggebläse 9 genutzt werden. Dabei wird stets der Saugstrom sowohl für den ersten, als auch für den zweiten Verfahrensschritt aus der Kabine 3 herausgeleitet und das Reingas unmittelbar, gegebenenfalls unter Zwischenschaltung des Kühlers 11, in die Kabine eingeleitet.

Während der Prozessgas-Umwälzung (erster Verfahrensschritt) ist die Saugleitung 15 über die Umschalteinrichtung 13 mit dem Saugleitungsanschluss 12 des aktiven Sauggebläses 9 verbunden, wobei in den gezeigten Ausführungsbeispielen in Strömungsrichtung a vor der Umschalteinrichtung 13 in der Saugleitung 15 zunächst ein Vorfilter 18 mit einem, gegebenenfalls abnehmbaren, Sammelbehälter 19, und in Strömungsrichtung a dem Vorfilter 18 nachfolgend ein Feinfilter 20 zwischengeschaltet sind. Vorfilter 18, Sammelbehälter 19 und Feinfilter 20 können zusammengefasst eine Regenerationseinrichtung R bilden.

Bei der Durchführung des zweiten Verfahrensschrittes zum Absaugen etwaiger Metallpartikel über das Schlauchelement 16 wird abgesaugtes Prozessgas, das gegebenenfalls mitgerissene Metallpartikel enthält, über die Saugleitung 14 und die Umschalteinrichtung 13 zum Saugleitungsanschluss 12 geführt, wobei auch hier im Bereich strömungsmäßig vor der Umschalteinrichtung 13 in die Saugleitung 14 eine Regenerationseinrichtung R' geschaltet ist, mit in Strömungsrichtung b zunächst einem Partikelabscheider 21 mit einem bevorzugt abnehmbaren Partikel-Sammelbehälter 22, dem in Strömungsrichtung b ein Gebläse-Schutzfilter 23 nachgeordnet ist.

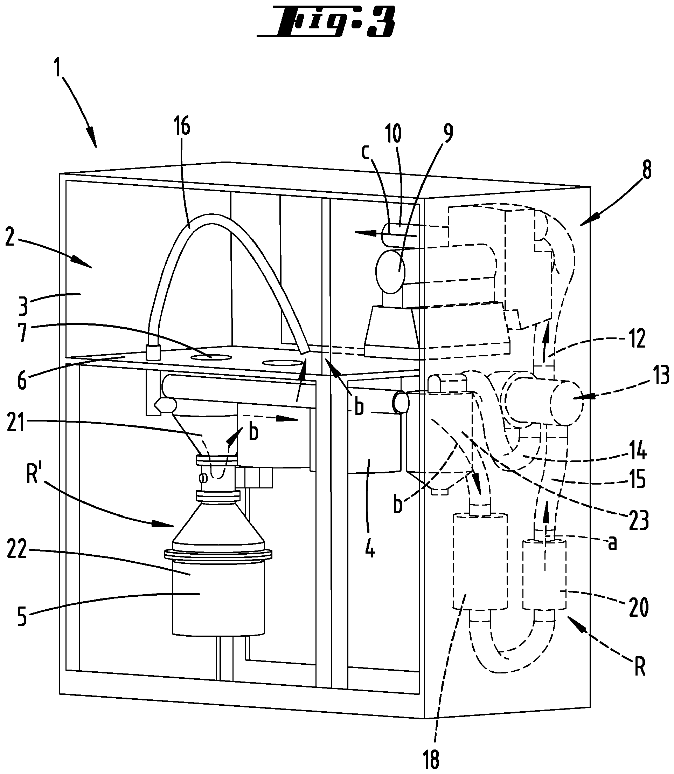

In den Figuren 1 und 3 sind Partikel-Sammelbehälter 22 mit unterschiedlichen Sammelvolumina dargestellt.

Alternativ zu einer unmittelbaren Anordnung der Saugvorrichtung 8 zu der Kabine 3 gemäß den Darstellungen in den Figuren 1 bis 3 kann auch die Saugvorrichtung 8 als Modul 24 vorgesehen sein. Ein solches Modul 24 kann einer Metall-Druckeinrichtung 2 zuordbar sein, dies über entsprechende Strömungs-Schnittstellen, wie auch bevorzugt elektrische oder elektronische Schnittstellen.

Hierzu können sowohl das Sauggebläse 9, als auch die zu Regenerationseinrichtungen R und R' zusammengefassten Filter und Abscheider, wie auch die Umschalteinrichtung 13, in einer gemeinsamen Umhausung 25 zusammengefasst sein.

Neben dem Sauggebläse 9 kann in dem Modul 24 des Weiteren ein Schaltschrank 26, der Kühler 11 und ein Verteil- und Steuerblock 27 angeordnet sein. In dem Verteil- und Steuerblock 27 ist bevorzugt die Umschalteinrichtung 13 integriert bzw. wird durch diese gebildet.

Die Filter- und Abscheideeinheiten der Regenrationseinrichtung R zur Durchführung des ersten Verfahrensschrittes (Umwälzung) kann als aus der Umhausung 25 ausfahrbares Modul gebildet sein, aufweisend einen - oder wie auch dargestellt zwei - Vorfilter 18 sowie einen jedem Vorfilter 18 zugeordneten Sammelbehälter 19, darüber hinaus einen strömungsmäßig nachgeschalteten Feinfilter 20.

Wie aus den Darstellungen ersichtlich, sind in dem dargestellten Ausführungsbeispiel zwei solcher Regenerationseinrichtungen R zur Durchführung des ersten Verfahrensschritts vorgesehen, um so eine hohe Standzeit des Filtersystems zu ermöglichen. So ist durch die Anordnung von zwei solcher Regenerationseinrichtungen R zufolge Umschalten von der einen Regenerationseinrichtung R auf die andere Regenerationseinrichtung R ein Filterwechsel ohne Unterbrechung des Fertigungsprozesses ermöglicht.

Auch die modulartig vorgesehene Regerationseinrichtung R' zur Durchführung des zweiten Verfahrensschrittes (Partikelabsaugung) kann, wie auch dargestellt, aus der Umhausung 25 ausfahrbar gestaltet sein. Hierbei weist die Regenerationseinrichtung R' bevorzugt den Partikelabscheider 21 und den Partikel-Sammelbehälter 22 sowie den Gebläse-Schutzfilter 23 auf.

Die Saugleitungen 14 und 15 wie auch die Druckleitung 10 können, die Umhausung 25 durchsetzend, nach außen geführt zur Bildung einer jeweiligen Schnittstelle 28, 29, und 30, über welche Schnittstelle der entsprechende Strömungsleitungsanschluss an die Kabine 3 bzw. das Schlauchelement 16 erfolgen kann.

Durch die vorgeschlagene Erfindung ist eine hohe Gasdichtigkeit im Bereich aller Komponenten, insbesondere während des Fertigungsprozesses, gegeben. Das Sauggebläse 9 bzw. Umwälzgebläse sorgt für eine optimale Schutzgasströmung im ersten Verfahrensschritt bzw. für eine optimale Prozessgas- bzw. Pulverförderung im zweiten Verfahrensschritt, dies über einen breiten Druck- und Volumenstrombereich bei geringer Wärmeentwicklung.

### Liste der Bezugszeichen

| | | | |
|---|---|---|---|
| 1 | Vorrichtung | 27 | Verteil- und Steuerblock |
| 2 | Metall-Druckeinrichtung | 28 | Schnittstelle |
| 3 | Kabine | 29 | Schnittstelle |
| 4 | Partikel-Vorratsbehältnis | 30 | Schnittstelle |
| 5 | Partikel-Sammelbehältnis | | |
| 6 | Bearbeitungsfläche | a | Prozessgas-Saugstrom |
| 7 | Öffnung | b | Prozessgas-Saugstrom |
| 8 | Saugvorrichtung | c | Prozessgas-Druckstrom |
| 9 | Gebläse | | |
| 10 | Druckleitung | R | Regenerationseinrichtung |
| 11 | Kühler | R' | Regenerationseinrichtung |
| 12 | Saugleitungsanschluss | | |
| 13 | Umschalteinrichtung | | |
| 14 | Saugleitung | | |
| 15 | Saugleitung | | |
| 16 | Schlauchelement | | |
| 17 | Abschieberelement | | |
| 18 | Vorfilter | | |
| 19 | Sammelbehälter | | |
| 20 | Feinfilter | | |
| 21 | Partikelabscheider | | |
| 22 | Partikel-Sammelbehälter | | |
| 23 | Gebläse-Schutzfilter | | |
| 24 | Modul | | |
| 25 | Umhausung | | |
| 26 | Schaltschrank | | |

## Patentansprüche

1. Verfahren zum Betrieb einer Metall-Druckeinrichtung (2), mit einer Kabine (3), in welcher der Metalldruck vorgenommen wird, wobei die Kabine (3) Einlass und Auslass aufweist und wobei weiter ein Gebläse (9) vorgesehen ist, mit welchem eine Atmosphäre in der Kabine (3) regenerierbar ist, wobei weiter eine Einrichtung vorgesehen ist, um Partikel absaugen zu können, wobei weiter in einem ersten Verfahrensschritt zur Reinigung der Atmosphäre in der Kabine (3) Prozessgas aus der Kabine (3) abgesaugt wird und durch eine Regenerationseinrichtung (R) geleitet wird und in einem zweiten Verfahrensschritt nach Beendigung des Druckvorganges mittels der Einrichtung aus der Kabine (3) überschüssige Partikel entfernt werden, wobei als Gebläse ein Sauggebläse (9) mit einem Saugleitungsanschluss (12) vorgesehen wird, **dadurch gekennzeichnet, dass** ein erster und ein zweiter Saugkanal (14,15) ausgehend von der Kabine (3) vorgesehen werden, die in einer dem Sauggebläse (9) vorgeschalteten Umschalteinrichtung (13) zusammengeführt sind, dass mit dem Sauggebläse (9) sowohl der erste Verfahrensschritt als auch der zweite Verfahrensschritt durchgeführt wird, wobei der Betrieb durch die dem Sauggebläse (9) vorgeschaltete Umschalteinrichtung (13) zwischen einem saugseitigen Anschluss des ersten und/ oder des zweiten Saugkanals (14, 15) an das Sauggebläse umgeschaltet wird.

2. Vorrichtung (1) zum Betrieb einer Metall- Druckeinrichtung (2), mit einer Kabine (3), in welcher der Metalldruck vorgenommen wird, wobei die Kabine (3) Einlass und Auslass aufweist und wobei weiter ein Gebläse (9) vorgesehen ist, mit welchem eine Atmosphäre in der Kabine (3) regenerierbar ist, wobei weiter eine Einrichtung vorgesehen ist, um Partikel absaugen zu können, wobei weiter zur Reinigung der Atmosphäre in der Kabine (3) Prozessgas aus der Kabine (3) unter Nutzung des Auslass abgesaugt und durch eine Regenerationseinrichtung (R) geleitet werden kann und nach Beendigung des Druckvorganges mittels der Einrichtung aus der Kabine (3) überschüssige Partikel entfernt werden können, wobei als Gebläse ein Sauggebläse (9) mit einem Saugleitungsanschluss (12) vorgesehen ist und **dadurch gekennzeichnet, dass** mit dem Sauggebläse (9) sowohl ein Absaugen von Prozessgas aus der Kabine (3) zur Regenerierung der Atmosphäre als auch nach Beendigung des Druckvorganges ein Absaugen überschüssiger Partikel aus der Kabine (3) durchführbar ist, dass ein erster und ein zweiter Saugkanal (14,15) ausgehend von der Kabine (3) vorgesehen sind, die in einer dem Sauggebläse (9) vorgeschalteten Umschalteinrichtung (13) zusammengeführt sind, wodurch der Betrieb zwischen einem saugseitigen Anschluss des ersten und/oder des zweiten Saugkanals (14,15) an das Sauggebläse (9) umschaltbar ist.

3. Verfahren nach Anspruch 1, **dadurch gekennzeichnet, dass** der Prozessgas-Saugstrom in dem ersten Verfahrensschritt durch eine erste Regenrationseinrichtung (R) geleitet wird, die unterschiedlich ist zu einer zweiten Regenerationseinrichtung (R'), durch die der Prozessgas-Saugstrom in dem zweiten Verfahrensschritt geleitet wird.

4. Verfahren nach Anspruch 3, **dadurch gekennzeichnet, dass** die erste und/oder zweite Regenerationseinrichtung (R, R') ein Filterelement aufweist.

5. Verfahren nach einem der Ansprüche 1 oder 3, 4, **dadurch gekennzeichnet, dass** mittels demselben Sauggebläse (9) auch Prozessgas in einem reinen oder gereinigten Zustand in die Kabine geleitet wird.

6. Vorrichtung nach Anspruch 2, **dadurch gekennzeichnet, dass** die Vorrichtung eine erste Regenerationseinrichtung (R) und eine zweite Regenerationseinrichtung (R') umfasst, und dass der Prozessgas-Saugstrom zur Reinigung der Atmosphäre in der Kabine (3) durch die erste Regenerationseinrichtung (R) leitbar ist, die unterschiedlich ist zu der zweiten Regenerationseinrichtung (R'), durch die der Prozessgas-Saugstrom zum Entfernen der überschüssigen Partikel nach Beendigung des Druckvorganges leitbar ist.

7. Vorrichtung nach Anspruch 6, **dadurch gekennzeichnet, dass** die erste und/oder zweite Regenerationseinrichtung (R, R') ein Filterelement aufweist.

8. Vorrichtung nach einem der Ansprüche 6 oder 7, **dadurch gekennzeichnet, dass** das Sauggebläse (9) mit der ersten und der zweiten Regenerationseinrichtung (R, R') in einem durch eine gemeinsame Umhausung (25) gebildeten Modul (24) zusammengefasst sind, wobei das Modul (24) mit der Kabine (3) über die ersten und zweiten Saugkanäle (14, 15) und eine Druckleitung (10) verbunden ist.

9. Vorrichtung nach Anspruch 8, **dadurch gekennzeichnet, dass** die Umschalteinrichtung (13) in dem Modul (24) angeordnet ist.

10. Vorrichtung nach einem der Ansprüche 8 bis 9, **dadurch gekennzeichnet, dass** dem Modul (24) zwei Regenerationseinrichtungen (R) zur Reinigung der Atmosphäre zugeordnet sind, von denen bei Betrieb der Vorrichtung (1) nur eines durchströmt wird.

## Claims

1. Method for operating a metal printing device (2), with a booth (3) in which the metal printing is carried out, wherein the booth (3) has an inlet and an outlet and wherein a blower (9) is provided with which an atmosphere in the booth (3) can be regenerated, wherein a device is also provided in order to be able to suck off particles, wherein further in a first process step for cleaning the atmosphere in the booth (3) process gas is extracted from the booth (3) and passed through a regeneration device (R) and in a second process step after completion of the printing process excess particles are removed from the booth (3) by means of the device, wherein a suction blower (9) with a suction line connection (12) is provided as the blower, **characterized in that** a first and a second suction duct (14, 15) are provided starting from the booth (3), which are brought together in a changeover device (13) connected upstream of the suction blower (9), **in that** both the first process step and the second process step are carried out with the suction blower (9), the operation being switched over between a suction-side connection of the first and/or the second suction channel (14, 15) to the suction blower by the switching device (13) connected upstream of the suction blower (9).

2. Device (1) for operating a metal printing device (2), having a booth (3) in which the metal printing is carried out, wherein the booth (3) has an inlet and an outlet and wherein a blower (9) is also provided, by means of which an atmosphere in the booth (3) can be regenerated, wherein a device is also provided in order to be able to suck off particles, wherein furthermore, for cleaning the atmosphere in the booth (3), process gas can be sucked off from the booth (3) using the outlet and passed through a regeneration device (R) and, after the end of the printing process, excess particles can be removed from the booth (3) by means of the device, wherein a suction blower (9) with a suction line connection (12) is provided as the blower, **characterized in that** the suction blower (9) can be used both to extract process gas from the booth (3) to regenerate the atmosphere and to extract excess particles from the booth (3) after the end of the printing process, that a first and a second suction duct (14, 15) are provided starting from the booth (3), which are brought together in a changeover device (13) connected upstream of the suction blower (9), whereby the operation can be changed over between a suction-side connection of the first and/or the second suction duct (14, 15) to the suction blower (9).

3. Method according to claim 1, **characterized in that** the process gas suction flow in the first process step is passed through a first regeneration device (R) which is different from a second regeneration device (R') through which the process gas suction flow is passed in the second process step.

4. Method according to claim 3, **characterized in that** the first and/or second regeneration device (R, R') has a filter element.

5. Method according to one of claims 1 or 3, 4, **characterized in that** process gas in a pure or purified state is also fed into the booth by means of the same suction blower (9).

6. Device according to claim 2, **characterized in that** the device comprises a first regeneration device (R) and a second regeneration device (R'), and **in that** the process gas suction flow for cleaning the atmosphere in the booth (3) can be passed through the first regeneration device (R), which is different from the second regeneration device (R'), through which the process gas suction flow for removing the excess particles after completion of the printing process can be passed.

7. Device according to claim 6, **characterized in that** the first and/or second regeneration device (R, R') has a filter element.

8. Device according to one of claims 6 or 7, **characterized in that** the suction blower (9) is combined with the first and second regenerative devices (R, R') in a module (24) formed by a common enclosure (25), the module (24) being connected to the booth (3) via the first and second suction ducts (14, 15) and a pressure line (10).

9. Device according to claim 8, **characterized in that** the changeover device (13) is arranged in the module (24).

10. Device according to one of claims 8 or 9, **characterized in that** two regeneration devices (R) for purifying the atmosphere are assigned to the module (24), only one of which is flowed through during operation of the device (1).

## Revendications

1. Procédé d'exploitation d'un dispositif d'impression de métal (2), avec une cabine (3) dans laquelle l'impression de métal est effectuée, la cabine (3) présentant une entrée et une sortie et une soufflante (9) étant en outre prévue, avec laquelle une atmosphère peut être régénérée dans la cabine (3), un dispositif étant en outre prévu pour pouvoir aspirer des particules, dans lequel, en outre, dans une première étape du procédé, du gaz de traitement est aspiré hors de la cabine (3) pour purifier l'atmosphère dans la cabine (3) et est guidé à travers un dispositif de régénération (R) et, dans une deuxième étape du procédé, après la fin du processus d'impression, les particules en excès sont éliminées de la cabine (3) au moyen du dispositif, une soufflante d'aspiration (9) avec un raccord de conduite d'aspiration (12) étant prévue comme soufflante, **caractérisée en ce qu'**un premier et un deuxième canal d'aspiration (14, 15) sont prévus en partant de la cabine (3), lesquels sont réunis dans un dispositif de commutation (13) monté en amont de la soufflante d'aspiration (9), **en ce que** la soufflante d'aspiration (9) permet d'exécuter aussi bien la première étape du procédé que la deuxième étape du procédé, le fonctionnement étant commuté par le dispositif de commutation (13) monté en amont de la soufflante d'aspiration (9) entre un raccordement côté aspiration du premier et/ou du deuxième canal d'aspiration (14, 15) à la soufflante d'aspiration.

2. Dispositif (1) pour l'exploitation d'un dispositif d'impression de métal (2), avec une cabine (3) dans laquelle l'impression de métal est effectuée, la cabine (3) présentant une entrée et une sortie et une soufflante (9) étant en outre prévue, avec laquelle une atmosphère dans la cabine (3) peut être régénérée, un dispositif étant en outre prévu, pour pouvoir aspirer des particules, où en outre, pour la purification de l'atmosphère dans la cabine (3), du gaz de processus peut être aspiré hors de la cabine (3) en utilisant la sortie et être conduit à travers un dispositif de régénération (R) et où, après la fin du processus d'impression, les particules excédentaires peuvent être éliminées de la cabine (3) au moyen du dispositif, une soufflante d'aspiration (9) avec un raccord de conduite d'aspiration (12) étant prévue comme soufflante, **caractérisée en ce que** la soufflante d'aspiration (9) permet à la fois d'aspirer du gaz de processus hors de la cabine (3) pour régénérer l'atmosphère et d'aspirer des particules en excès hors de la cabine (3) après la fin du processus de mise sous pression, **en ce qu'**il est prévu un premier et un deuxième canal d'aspiration (14, 15) partant de la cabine (3), qui sont réunis dans un dispositif de commutation (13) monté en amont de la soufflante d'aspiration (9), ce qui permet de commuter le fonctionnement entre un raccordement côté aspiration du premier et/ou du deuxième canal d'aspiration (14, 15) à la soufflante d'aspiration (9).

3. Procédé selon la revendication 1, **caractérisé en ce que** le courant d'aspiration de gaz de traitement est dirigé, dans la première étape du procédé, à travers un premier dispositif de régénération (R) qui est différent d'un deuxième dispositif de régénération (R') à travers lequel le courant d'aspiration de gaz de traitement est dirigé dans la deuxième étape du procédé.

4. Procédé selon la revendication 3, **caractérisé en ce que** le premier et/ou le deuxième dispositif de régénération (R, R') comporte un élément filtrant.

5. Procédé selon l'une des revendications 1 ou 3, 4, **caractérisé en ce que** le même ventilateur d'aspiration (9) envoie également du gaz de traitement à l'état pur ou purifié dans la cabine.

6. Dispositif selon la revendication 2, **caractérisé en ce que** le dispositif comprend un premier dispositif de régénération (R) et un deuxième dispositif de régénération (R'), et **en ce que** le courant d'aspiration de gaz de traitement pour la purification de l'atmosphère dans la cabine (3) peut être conduit à travers le premier dispositif de régénération (R), qui est différent du deuxième dispositif de régénération (R'), à travers lequel le courant d'aspiration de gaz de traitement peut être conduit pour éliminer les particules en excès après la fin du processus d'impression.

7. Dispositif selon la revendication 6, **caractérisé en ce que** le premier et/ou le deuxième dispositif de régénération (R, R') comporte un élément filtrant.

8. Dispositif selon l'une des revendications 6 ou 7, **caractérisé en ce que** le ventilateur aspirant (9) est regroupé avec les premier et deuxième dispositifs de régénération (R, R') dans un module (24) formé par une enceinte commune (25), ledit module (24) étant relié à la cabine (3) par les premier et deuxième canaux d'aspiration (14, 15) et une conduite de refoulement (10).

9. Dispositif selon la revendication 8, **caractérisé en ce que** le dispositif de commutation (13) est disposé dans le module (24).

10. Dispositif selon l'une des revendications 8 ou 9, **caractérisé en ce que** le module (24) est associé à deux dispositifs de régénération (R) pour la régénération de l'atmosphère, dont un seul est traversé lors du fonctionnement du dispositif (1).
